Europäisches Patentamt

European Patent Office

Office européen des brevets

(11) Publication number: 0 201 343
A2

# EUROPEAN PATENT APPLICATION

(21) Application number: 86303534.1

(22) Date of filing: 09.05.86

(51) Int. Cl.⁴: B60J 1/17 , B60R 13/06

(30) Priority: 09.05.85 US 732385

(43) Date of publication of application:
17.12.86 Bulletin 86/46

(84) Designated Contracting States:
DE FR GB IT SE

(71) Applicant: SCHLEGEL CORPORATION
400 East Avenue
Rochester, New York 14607(US)

(72) Inventor: Lownsdale, Gary Richard
15403 Edington
Livonia Michigan 48154(US)

(74) Representative: Carpmael, John William
Maurice et al
CARPMAELS & RANSFORD 43 Bloomsbury
Square
London, WC1A 2RA(GB)

(54) Apparatus for sealing an opening.

(57) A vehicle window assembly includes a windowpane; first and second spaced apart guide rails at the sides of a window opening; mounting means attached to said window and slidably engaging the guide rails, the guide rails being characterized by a substantially constant radius of curvature, and the mounting means characterized by a substantially wedge-shaped configuration for positioning a top edge of the windowpane a first distance from the guide rails and for positioning a bottom edge of the windowpane a greater distance from said guide rails.

FIG. 6

## APPARATUS FOR SEALING AN OPENING

This invention relates in general to apparatus for positioning a movable panel and more particuarly, to a vehicle window or roof panel guide assembly for nonarticulated motion of a panel between a closed position flush with the outside surface of the vehicle door, body side or roof in which the window or roof panel is located, and an open position.

It is important, particularly with respect to vehicles such as automobiles, to provide a smooth outer body surface free from interruptions that greatly increase the drag created by the vehicle as it moves through the air. Hinged, bendable and fixed windows have heretofore been used to provide smooth surfaces. However, providing such a smooth surface where movable window and/or roof panels that are slidably positionable to open or close an opening are involved, has long challenged vehicle designers. Heretofore, certain compromises between the tolerable surface irregularities, the panel curvature and the complexity of the guiding mechanism have been necessary. Where movable panels providing a substantially flush surface when closed have been constructed, they have required complex, expensive and unreliable mechanisms such as articulated guide mechanisms. Alternatively, simple, reliable and inexpensive mechanisms have provided less than desired degrees of surface flushness.

Providing a flush surface in a vehicle door or other side window glass assembly is particularly challenging. Since the problems associated with doors are generally greater than those associated with other side windows such as the back seat, side windows in two-door automobiles, a door window will be used as an exemplary embodiment of this invention.

Glass windowpanes in vehicle doors are ordinarily curved for reasons relating to styling, ease of manufacture and aerodynamics. When retracted, the windowpane must fit within the door panel and must not interfere with the required interior structural elements of the door, such as the side intrusion beam, the door latch and the window regulator mechanism. While it has been possible to provide movable window panels that are approximately flush on one or two sides of the windowpane, it has not been possible to provide four-sided flush glass without complex articulated mechanisms.

Heretofore, it has been common to sacrifice flushness at the belt line of automobile doors in order to obtain a higher degree of flushness at the top and sides of the window glass pane. While relatively attractive, relatively smooth outside surfaces have been provided, a four-sided flush glass assembly for an automobile door that utilizes a simple, reliable, non-articulated regulator-guide system has thus far eluded automobile designers.

Examples of prior art guiding mechanisms may be seen in U.S. Patents No. 3,844,064; 4,219,968; 4,089,134; German Patent Application No. P 2435766.2-21; Italian patent application No. 68926-A/80; and Japanese Utility Model Publications numbered 143475/1981 and 83,520/1981. To date, however, four-sided flush glass has been unobtainable with simple reliable guide and regulator mechanisms.

Accordingly, it is an object of this invention to provide a movable panel adapted to close an aperture that provides a smooth surface when closed.

It is another object of this invention to provide such a movable panel that is nonarticulated.

It is still another object of this invention to provide a movable window glass panel for providing four-sided flush sealing in a vehicle door.

It is a further object of this invention to provide flush window glass in a vehicle door that does not require an unusually thick door construction.

It is a still further object of this invention to provide a window assembly that allows a glass pane of compound curvature of the panel surface to be used in a four-sided flush glass assembly.

Briefly stated and in accordance with a presently preferred embodiment of this invention, a vehicle window assembly comprises a windowpane; first and second spaced apart guide rails at the sides of a window opening; mounting means attached to said window and slidably engaging the guide rails, the guide rails being characterized by a substantially constant radius of curvature, and the mounting means characterized by a substantially wedge-shaped configuration for positioning a top edge of the windowpane a first distance from the guide rails and for positioning a bottom edge of the windowpane a greater distance from said guide rails.

While the invention itself is set forth with particularity in the appended claims, the above and further objects and advantages of the invention will be more readily appreciated by reference to the following detailed description thereof taken in connection with the accompanying drawing in which:

Figure 1 is a side elevational view of a windowpane for a vehicle door and a supporting frame member therefor, both in accordance with a presently preferred embodiment of the invention;

Figure 2a is a section view taken along line a-a of Figure 1;

Figure 2b is a section view taken along line b-b of Figure 1;

Figure 2c is a section view of an alternative embodiment of this invention taken along line a-a of Figure 1;

Figure 2d is a section view of another alternative taken along line d-d of Figure 1;

Figure 3 is a fragmentary section view through a vehicle door showing the windowpane thereof in its fully lowered position;

Figure 4 is a fragmentary section view of a vehicle door showing the windowpane in a half raised position;

Figure 5 is a fragmentary section view of a vehicle door showing the windowpane in its closed position; and

Figure 6 is a schematic view of a door and window assembly in accordance with this invention.

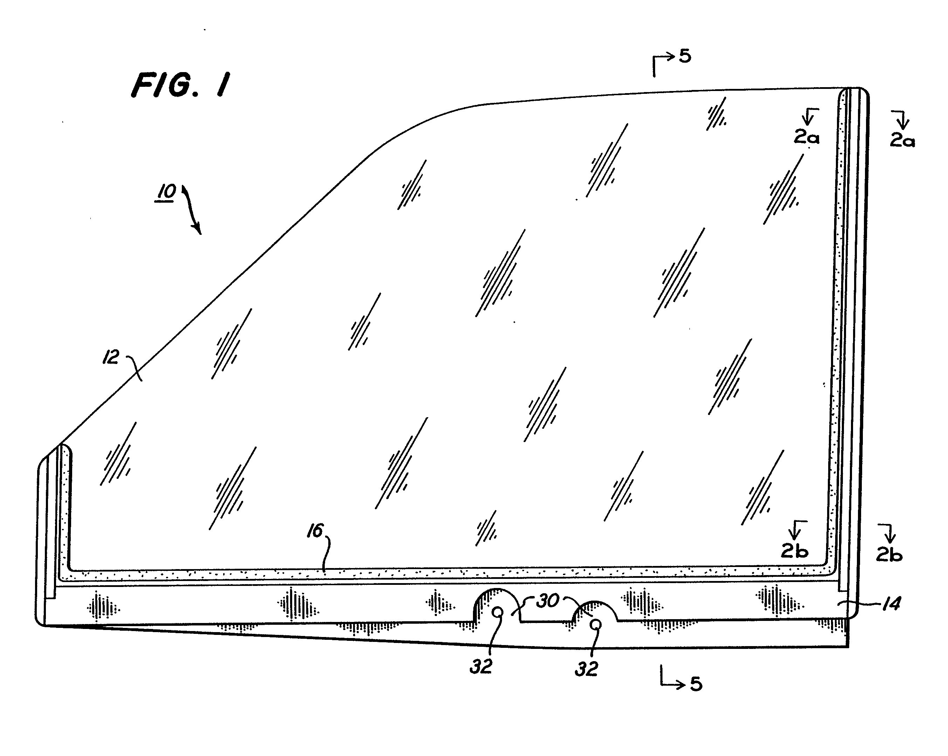

Referring now to Figure 1, a window assembly 10 includes a windowpane 12 mounted in a peripheral carrier or frame 14. Preferably, windowpane 12 is a section of a cylindrical surface as is conventional in contemporary automobile windowpanes. This invention is not limited to windowpanes of any particular shape, it being understood that flat panes and panes of noncircular shape including ·panes having complex shapes may be employed as long as the periphery of the window opening matches the shape of the window along at least one closed line. While a door window is illustrated in accordance with an exemplary embodiment of this invention, the invention is not so limited and can be used to provide a nonarticulated four-sided flush roof panel or body window mounted in a door.

Frame 14 is preferably constructed of a relatively rigid material such as molded plastic or the like and is attached to windowpane 12 by an adhesive layer 16. In the alternative, other known attaching means such as rivets, clips, direct bonding or the like, may be employed.

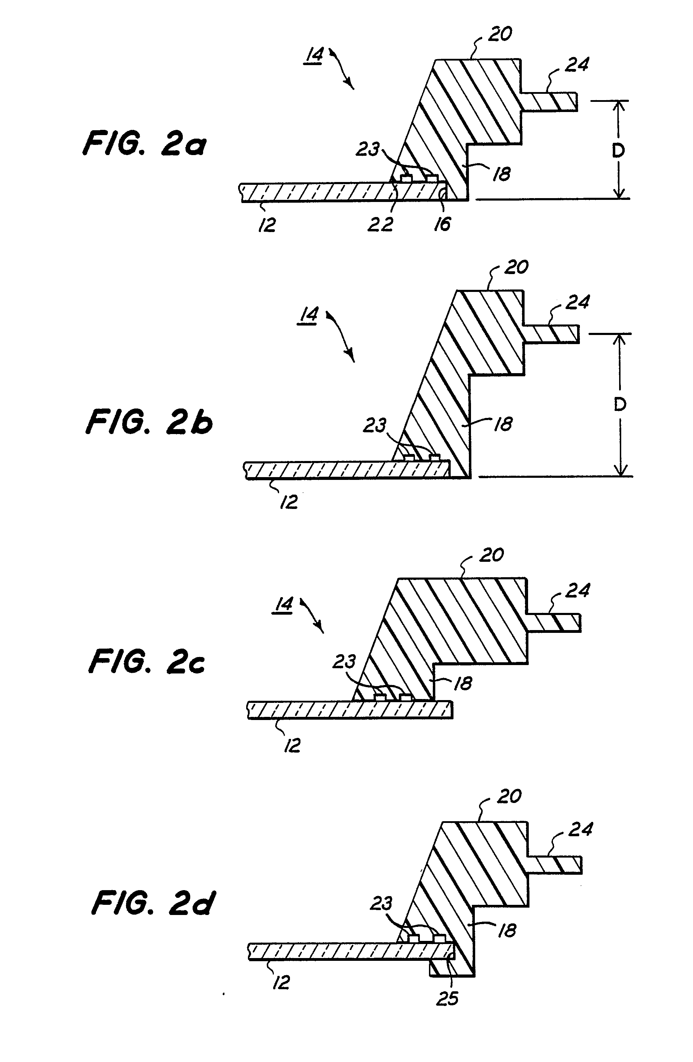

As shown in the cross-sectional views at Figures 2a and 2b, the upstanding vertical portions of frame member 14 are generally L-shaped in section and include legs 18 and 20 disposed substantially at right angles. Leg 18 preferably includes an L-shaped recess 22 for receiving one edge of windowpane 12 and one or more grooves 23 for receiving a bead of adhesive. Opposite leg 20 is provided with an elongated tongue 24 extending outwardly from leg 20 along the entire length of the side portion of the frame and spaced from the outer surface of windowpane 12 a distance D that is greater at the bottom of frame member 14 than at the top thereof. As used herein, top shall refer to the leading edge of the windowpane or panel as the same is moved from an open to a closed position, and to that portion of the window opening in closest proximity to the top of the windowpanel when the same closes said opening.

While tongue 24 is shown as extending along the entire edge of frame 14, the invention is not so limited, and a plurality of discrete tongue segments may also be employed. Alternatively, one or more pins may be employed either with or without friction reducing rollers adapted to engage groove 46 as will be more fully described infra. Where tongue segments or pins may be employed are used, they must be arranged to provide the greater spacing between the bottom of the window and the guide rails than at the top thereof, as shown.

The precise method by which frame 14 is attached to windowpane 12 may be varied from that shown. For example, as shown in Figure 2c, L-shaped recess 22 may be omitted and a simple flat surface seal employed. In the alternative, as shown in Figure 2d, a notch 25 surrounding the edge of windowpane 12 may be employed. Frame member 14 need not be attached to windowpane 12 at the extreme edge of the windowpane, but may be spaced inwardly as shown in Figure 2c and in U.S. Patent No. 4,240,277.

Frame 14 includes conventional attachment means comprising recesses 30 and apertures 32 at the bottom edge portion of the frame for receiving a lifting bracket for attachment to conventional regulator means. Such lifting brackets and regulator means are conventional as is their method of attachment, and therefore, the brackets and regulators are not shown in the drawing.

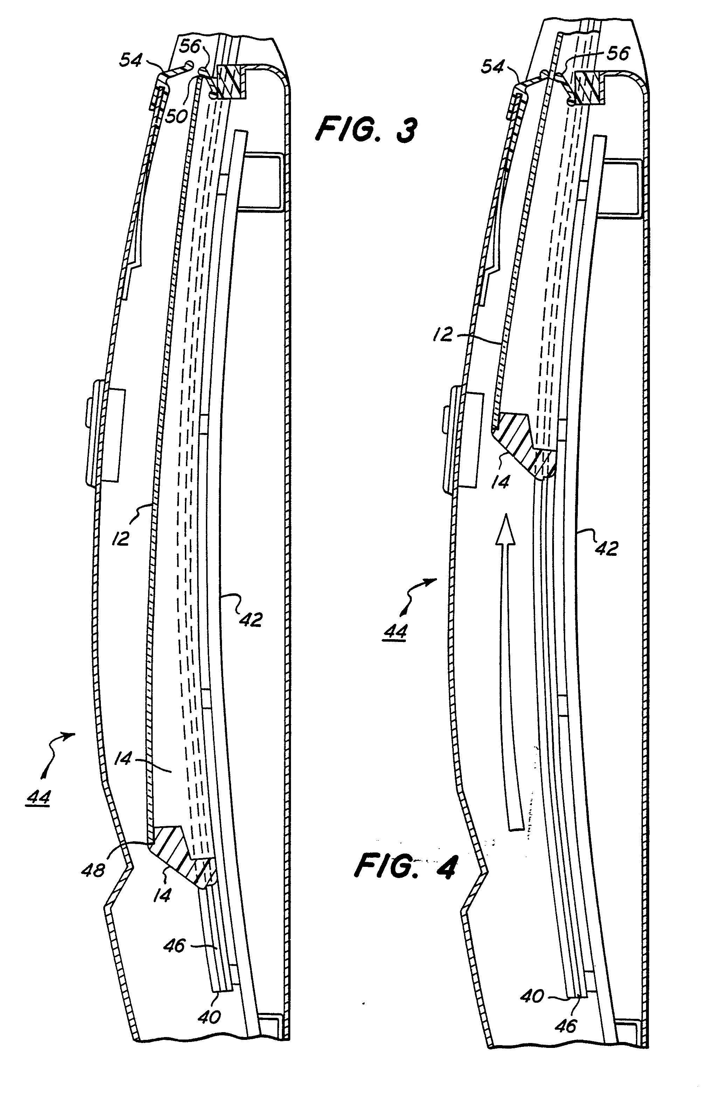

As will be appreciated, and as may be most readily seen in Figures 3-6, frame member 14, as viewed from the edge thereof, is wedge-shaped, tapering from its widest portion at the bottom of windowpane 12 to its narrowest portion at the top.

Figure 3 is a section view of a vehicle door including the window assembly of this invention showing windowpane 12 and frame 14, as well as the guide means therefor. Omitted from Figures 3 and 4 are details of the window lifting and regulator mechanism which are conventional.

A guide rail 40 and an opposite facing guide rail, not visible in this figure, are mounted on an inner structural support member 42 and an opposite member, not shown, disposed within the vehicle door which is designated gererally at 44.

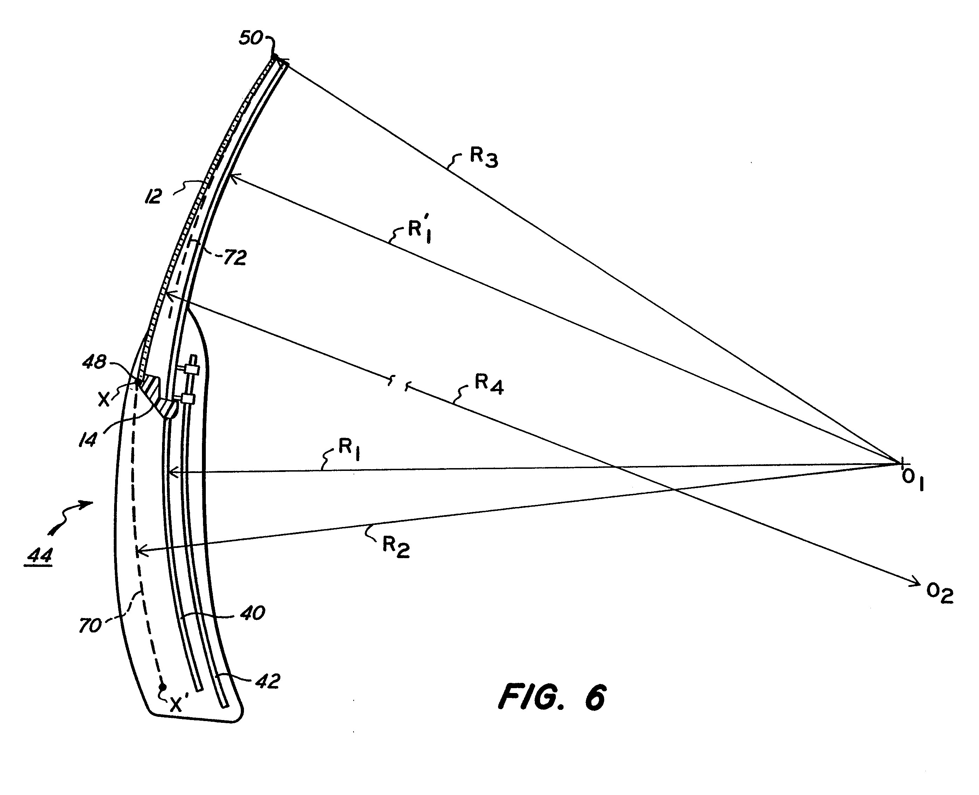

As can be even more readily appreciated by reference to Figure 6, guide rail 40 has a substantially constant radius of curvature $R_1$ about a fixed center $O_1$. Guide rail 40 extends from within door 44 upwardly within the door frame portions located at the B pillar of the vehicle, the other guide rail being located at the A pillar, as the same are conventionally denominated. Guide rail 40 has a longitudinally extending groove 46 formed therein for receiving tongue 24 of frame 14. It will be appreciated that guide rail 40, and particularly groove 46, must have a substantially constant radius of curvature $R_1$, that is, they must be either straight or circular, in order to allow tongue 24 to slide freely therein. The radius of curvature $R_1$ of tongue 24 must be substantially equal to that of groove 46 and must have the same center. These constraints do not apply when tongue 24 is replaced by no more than two narrow tongue segments or pins.

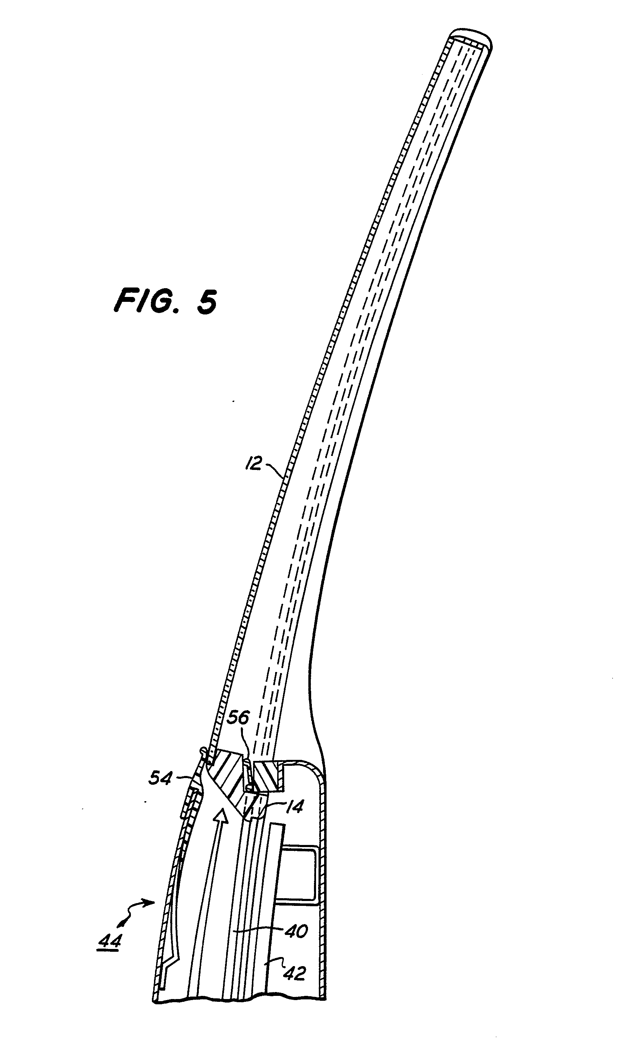

Due to its wedge shape, frame 14 supports windowpane 12 at an angle with respect to guide rail 40 so that the bottom edge 48 of windowpane 12 is spaced further from guide rail 40 than the top edge 50 of the windowpane. As the window is raised from the position shown in Figure 3 through the position shown in Figure 4 to the closed position shown in Figure 5, points lying along the bottom edge 48 of the windowpane move between points X and X' along circular arc 70 of a first radius $R_2$. Points lying along upper edge 50 move along a circular arc 72 concentric with arc 70 followed by points along bottom edge 48, but a smaller radius $R_3$. $R_3$ is greater than or equal to $R_1$ and is less than $R_2$. Intermediate points on windowpane 12 move along further arcs having a common center and an intermediate radius with respect to vertically aligned points along the top and bottom edges of the window.

As used herein, reference to the angle between windowpane 12 and guide rail 40 will be understood to refer to the angle between the circular arcs represented by the extensions of the windowpane and groove 46 respectively, at their point of intersection. Because the radii of the two arcs may differ, this angle is not constant as would be the case with circular arcs of equal radii. Nevertheless, the existence of this angle may be readily appreciated in a qualitative sense by reference to Figure 6 which, though as accurate as possible in its representation of the invention, is not represented to be strictly to scale. Specifically, because the circular arcs described by the guide rail and the windowpane are characterized by very large radii, their representations in the drawing may not appear exactly circular. With regard to the windowpane itself, this is not critical since the invention will be operative with windowpanes varying from straight to highly curved. The guide rail, however, must either be straight or circular if a frame having a continuous tongue is used or tongue 24 of frame 14 will not be freely movable in slot 46.

As can be seen in Figures 3-6, as windowpane 12 is raised, it moves outwardly. This can be most readily appreciated by referring to the belt line weatherseal of the window assembly in accordance with this invention including weatherseal elements 54 and 56. As shown in Figure 3, when windowpane 12 ia fully lowered, the upper edge of the window is spaced from weatherseal element 54 and in contact with weatherseal element 56. As seen in Figure 4, when the window is in its half raised position, the windowpane has shifted to a position approximately intermediate weatherseal elements 54 and 56, and when the window is fully raised, windowpane 12 has deflected weatherseal element 54 to a position flush with the outside of the door panel and the windowpane is spaced a substantial distance from weatherseal element 56.

While the invention has been shown and described in connection with a presently preferred embodiment thereof, those skilled in the art will recognize that many modifications and changes will become apparent to those skilled in the art without departing from the true spirit and scope of the invention which accordingly, is intended to be limited solely by the appended claims.

**Claims**

1. A vehicle window assembly comprising: a movable windowpane;

first and second spaced-apart guide rails characterized by a substantially constant radius of curvature;

mounting means attached to said windowpane and slidably engaging said guide rails characterized by a substantially wedge-shaped cross-section for positioning a top edge of said window a first distance from said guide rails and for positioning a bottom edge of said window a greater distance from said guide rails.

2. The window assembly of Claim 1 wherein said mounting means compreses first and second generally L-shaped upright supporting members each having one leg section attached to said windowpane adjacent an edge thereof and a second leg section engaging said guide rails.

3. The window assembly of Claim 1 wherein said guide rails comprise generally U-shaped channels having an elongated groove and said mounting means comprises means engaging said groove.

4. The assembly of Claim 3 wherein said mounting means comprises an elongated tongue on said mounting means slidably engaging said groove.

5. The assembly of Claim 4 wherein said tongue has a radius of curvature substantially equal to that of said guide rails.

6. The assembly of Claim 1 wherein said mounting means comprises a mounting frame sealingly attached to said windowpane along said sides and a bottom edge of said windowpane.

7. The assembly of Claim 2 wherein said frame comprises a substantially rigid L-shaped member having a first leg engaging said windowpane and a second leg slidingly engaging said guide rail.

8. A movable panel assembly for a vehicle comprising:

a panel;

an opening for receiving said panel;

sealing means adjacent the perimeter of said opening for engaging said panel when said panel is positioned in and closes said opening;

guide means adjacent first and second sides of said opening said guide means including an elongated guide slot defining a circular track of a first radius;

mounting means attached to said panel and slidingly connected to said guide means, said mounting means characterized by a wedge-like shape for holding said panel at an angle to said track with a first edge of said panel positioned a first distance from said track and a second edge of said panel positioned a greater distance from said track so that said panel engages said sealing means substantially simultaneously around the periphery of said panel and only when said panel is in position to close said opening

9. A vehicle window assembly comprising:

an at least substantially right cylindrical windowpane having a first radius of curvature;

a pair of curved elongated guide rails having a second substantially constant radius of curvature; and

wedge-shaped mounting means fixedly attached to said windowpane and slidably attached to said guide rails for spacing said window a first distance from said guide rails at one edge of said window and a substantially smaller distance at an opposite edge.

10. A guide mechanism for a movable panel adapted for flush sealing an aperture comprising;

a track having a first substantially constant radius of curvature;

panel support means slidably engaging said track for orienting said panel;

said support means characterized by a wedge shape whereby when said panel is raised or lowered, a point on a first edge of said panel moves through an arc having a first center and a first radius; and

a point on a second edge of said panel moves through a second arc having the same center as said first arc and a radius greater than said first radius.

11. A moveable panel assembly for a vehicle body comprising:

a vehicle body panel having an opening;

first and second spaced apart guide rails attached to the body panel;

a moveable panel;

mounting means attached to said moveable panel, said mounting means slidably engaging said guide rails and positioning a top edge of said moveable panel a first distance from said guide rails and the bottom edge of said moveable panel, a greater distance from said guide rails.

12. A window system as in Claim 11 wherein the guide rails have substantially equal and constant radii of curvature.

13. A moveable window system as in Claim 12 wherein the mounting means comprises a frame with at least one elongated toingue member which slidingly engages one of said guide rails.

14. A moveable window system as in Claim 12 wherein at least one of the elongated tongue members extends a distance substantially equal to the vertical length of the windowpane.

15. A moveable window system as in Claim 11 wherein the mounting means comprises pin guides.

16. A moveable window system as in Claim 11 wherein said mounting means comprises guides with rollers.

17. A moveable window system as in claim 12 wherein the exterior surface of the window assembly is substantially flush with the exterior surface of the vehicle body panel when the windowpane closes the window opening.

18. A moveable window system as in Claim 13 wherein the exterior surface of the window assembly is substantially flush with the exterior surface of the vehicle body panel when the windowpane closes the window opening

19. A moveable window system as in Claim 14 wherein the exterior surface of the window assembly is substantially flush with the exterior surface of the vehicle body panel when the windowpane closes the window opening.

20. A moveable window system as in Claim 11 wherein the exterior surface of the window assembly is substantially flush with the exterior surface of the vehicle body panel when the windowpane closes the window opening.

21. A moveable window system as in Claim 16 wherein the exterior surface of the window assembly is substantially flush with the exterior surface of the vehicle body panel when the windowpane closes the window opening.

22. A moveable window system as in Claim 12 wherein the radii of curvature of the tongue members are substantially equal to the radii of curvature of grooves within the guide rails for receiving the tongues.

23. In a movable panel assembly of the type including a panel, guide means for slidably locating the panel for sealing an aperture, and mounting means attached to said panel and slidably attached to said guide means, the improvement for providing a substantially flush seal between the panel and the aperture wherein said mounting means comprises means for holding said panel at a predetermined nonzero angle with respect to said guide means, said angle and the spacing between said panel and said guide means selected so that an advancing edge of said panel at least substantially intersects the surface defined by said aperture when said panel closes said aperture, and the periphery of said panel lies essentially flush with the periphery of said aperture.

FIG. 1

**FIG. 2a**

_14_

20

24

23

18

D

12    22    16

**FIG. 2b**

_14_

20

24

23

18

D

12

**FIG. 2c**

_14_

20

24

23

18

12

**FIG. 2d**

20

24

23

18

12

25

FIG. 3

FIG. 4

FIG. 5

0 201 343

FIG. 6

0 201 343